# EUROPEAN PATENT APPLICATION

(11) **EP 4 761 471 A1**
(43) Date of publication of application: **17.06.2026**
(21) Application number: 24220095.4
(22) Date of filing: 16.12.2024
(51) Int. Cl.: H05B 47/19, H05B 47/175, H04B 5/43, H01Q 1/22, F21V 23/04, G06K 19/077, H04B 5/72, H04B 5/77, H04B 5/79, F21V 23/00, F21V 23/06, F21W 131/103

(54) **SYSTEM AND METHOD FOR REMOTE COMMISSIONING OF LIGHTING DRIVERS VIA EXTERNAL NFC INTERFACE**

(71) Applicant: Tridonic GmbH & Co. KG, 6851 Dornbirn (AT)
(72) Inventor: Raich, Andre, 6851 Dornbirn (AT)
(74) Representative: Rupp, Christian

(57) **Abstract**

The present invention provides an NFC antenna assembly (10) for a street lighting system. The NFC antenna assembly (10) comprises an NFC antenna, and a terminal soldered onto and extending from a surface plane of the NFC antenna assembly, the terminal being configured to connect two conductors (13a, 13b), enabling a wired connection between the NFC antenna assembly and an external device (22). This invention further provides a lighting system (1) comprising a luminaire including a luminaire housing (21), a lighting driver (22) located within the luminaire housing, and an NFC antenna (20) arranged on the lighting driver (22). The system comprises an NFC antenna assembly (10) positioned outside the luminaire housing (21), and two conductors (13a, 13b) connecting the NFC antenna (20) and the NFC antenna assembly (10), enabling NFC communication between the lighting driver (22) and the NFC antenna assembly (10).

## Description

### TECHNICAL FIELD

The present invention relates to the field of lighting systems, specifically focusing on the commissioning and maintenance of lighting fixtures such as streetlights. It introduces a method and apparatus for extending Near Field Communication (NFC) interfaces to facilitate remote configuration and management of lighting drivers, thereby enhancing accessibility and operational efficiency.

### BACKGROUND

In contemporary street lighting systems, configuring or updating driver settings-such as adjusting light output at pedestrian crossings or modifying pre-set time-based dimming schedules ( such as chronoSTEP profiles)-often necessitates direct physical access to the lighting fixture's driver. Typically, this involves using NFC modules located within the luminaire housing, which are not easily accessible from ground level. Consequently, maintenance personnel must employ equipment like lifting platforms to reach these interfaces, increasing labor, time, and costs. Moreover, performing such tasks under adverse weather conditions poses safety risks and can compromise the lighting fixture's integrity.

While mobile phones and associated applications offer some solutions for commissioning, they may not always be practical for installers, especially in outdoor environments where weather, lighting conditions, and device limitations can hinder effective use. Therefore, there is a need for a more accessible and reliable method to remotely commission and maintain lighting drivers without the drawbacks associated with current practices.

### SUMMARY

In view of the above-discussed challenges, the objective of this invention is to propose an innovative system that extends the NFC interface from within the luminaire housing to a more accessible location. One objective is to enable passive NFC communication over several meters without requiring an intermediate booster driver or amplifier. Additionally, the invention aims to simplify the system architecture while ensuring cost efficiency and reliability.

These and other objectives are achieved by the solution of this disclosure as described in the independent claims. Advantageous implementations are further defined in the dependent claims.

According to a first aspect of the invention, an NFC antenna assembly is disclosed. The NFC antenna assembly comprises an NFC antenna, and a terminal soldered onto and extending from a surface plane of the NFC antenna assembly, the terminal being configured to connect two conductors, enabling a wired connection between the NFC antenna assembly and an external device.

The proposed NFC antenna assembly enables an NFC communication to external devices via wired conductors, allowing for the extension of the NFC interface beyond the NFC assembly itself. This creates a physical interface that facilitates easier and more flexible connections, enabling remote NFC communication. Optionally, the external device may be another NFC antenna assembly. The wired conductors can be ordinary copper wires.

According to an implementation of the first aspect of the invention, the terminal is configured to connect the two conductors to an external NFC antenna, allowing for extended NFC communication over a distance exceeding 1 meter, preferably exceeding 2 meters.

By enabling the connection of the external NFC antenna, this passive approach achieves NFC communication over distances of more than 1 meter, and even exceeding 2 meters or more (e.g., 4 meters). The NFC antenna assembly operates passively, meaning it does not rely on external power sources, batteries, or active amplification systems.

This extended range allows for convenient NFC commissioning from a safer and more accessible location, reducing the need for direct access to the location of the external NFC antenna. For instance, the external NFC antenna may locate in a housing of a streetlight, and the proposed NFC antenna assembly allows a ground-level access, which eliminates the need for lifting platforms or ladders. Possibly, the external NFC antenna may belong to another NFC antenna assembly.

According to another implementation of the first aspect of the invention, the terminal is configured to facilitate the insertion of the two conductors at an angle ranging from 0 to 60 degrees relative to the terminal's entry point.

Possibly, the terminal assembly may include two prominent connection points for attaching the conductors, allowing secure mechanical and electrical contact. Advantageously, this configuration facilitates flexible and user-friendly installation of the conductors at various angles (0 to 60 degrees, e.g., 45 degrees) relative to the terminal's entry point. This enhances the ease of assembly, allowing for more adaptable installation options, especially in confined or challenging spaces where straight entry may not be possible.

It may be understood that the proposed NFC antenna assembly is not flat like conventional tags but instead features a buck-like structure with additional height due to the soldered terminal for conductor connections.

According to a second aspect of the invention, a lighting system is disclosed, comprising a luminaire including a luminaire housing, a lighting driver located within the luminaire housing, and an NFC antenna arranged on the lighting driver; an NFC antenna assembly positioned outside the luminaire housing; and two conductors connecting the NFC antenna and the NFC antenna assembly, enabling NFC communication between the lighting driver and the NFC antenna assembly, which preferably is an NFC antenna assembly as described in the first aspect of the invention.

Advantageously, the NFC antenna assembly is positioned outside the sealed luminaire housing, thereby enabling NFC communication with the lighting driver without requiring access to the luminaire's interior. This significantly improves commissioning and maintenance accessibility, eliminating the need to open the housing or employ lifting platforms.

According to an implementation of the second aspect of the invention, the two conductors extend through the luminaire housing, enabling NFC communication with the lighting driver while the luminaire remains sealed.

It may be understood that the conductors penetrate the sealed housing, enabling NFC communication between the interior lighting driver and the external NFC antenna assembly. This preserves the luminaire's sealed structure, maintaining its weatherproof integrity while enabling external commissioning and adjustments.

According to a further implementation of the second aspect of the invention, the lighting driver includes an internal NFC antenna disposed within the lighting driver, the internal NFC antenna being configured to facilitate NFC communication with the NFC antenna assembly via the NFC antenna.

Notably, an NFC tag may be embedded inside the driver. The NFC antenna placed on the driver may be glued or otherwise attached to the driver's housing (the outer shell of the driver). In this way, the external NFC antennas (i.e., the NFC antenna placed on the driver and the NFC antenna assembly outside the luminaire housing) are directly aligned with the internal NFC tag, allowing for efficient signal transmission between the internal NFC tag and an external NFC reader (like a smartphone or NFC-enabled device).

In another example, the lighting driver may be equipped with a terminal where the two wires can be inserted to enable the connection to the external NFC antenna.

According to a further implementation of the second aspect of the invention, the lighting driver comprises a printed circuit board (PCB) and the internal NFC antenna is integrated into the PCB of the lighting driver.

Embedding the NFC antenna into the PCB of the lighting driver provides a compact, cost-effective, and efficient design. This ensures stable NFC signal transmission, reduces assembly complexity, and enhances the robustness of the NFC communication pathway.

According to another implementation of the second aspect of the invention, the NFC antenna is an NFC antenna assembly according to the first aspect of the invention.

Namely, the system may comprise two NFC antenna assemblies as describe in the first aspect of the invention. One antenna assembly is disposed inside the luminaire housing (on the driver), the other one is distanced to the luminaire.

According to another implementation of the second aspect of the invention, the NFC antenna assembly is mounted at a height accessible to a human user.

Advantageously, positions the NFC antenna assembly at a human-accessible height, allowing ground-level commissioning and maintenance. This eliminates the need for lifting platforms or ladders, thereby reducing maintenance time, labor costs, and safety risks for personnel.

According to another implementation of the second aspect of the invention, the lighting system further comprises a packaging box for the luminaire, wherein the NFC antenna assembly outside the luminaire housing (21) is positioned outside the packaging box, allowing for NFC communication with the lighting driver while the luminaire is within the packaging box.

Placing the NFC antenna assembly outside the packaging box allows for the commissioning and programming of the lighting driver without removing the luminaire from its packaging. This streamlines pre-installation configuration, reducing installation time and labor while ensuring the luminaire remains protected during handling.

According to a third aspect of the invention, a method for commissioning a lighting driver in a lighting system, as described in the second aspect, is disclosed. The method involves positioning the NFC antenna assembly at a location accessible to a commissioning device and distanced to the luminaire; and utilizing the NFC antenna assembly to program or adjust settings of the lighting driver without requiring direct physical access to the lighting driver.

This method provides a practical, cost-effective solution that improves accessibility and simplifies the commissioning and maintenance of lighting systems and other NFC-enabled devices. This eliminates the need for direct physical access to the lighting driver, allowing configuration and adjustment from the ground or a distance, improving operational efficiency and safety.

According to an implementation of the third aspect of the invention, the NFC antenna assembly is positioned at a height accessible to a human user, facilitating commissioning and maintenance without additional equipment.

By positioning the NFC antenna assembly at an accessible height, commissioning and maintenance can be performed directly from ground level. This significantly reduces the need for elevated work platforms or scaffolding, thereby lowering operational costs, improving safety, and simplifying the process for personnel.

According to another implementation of the third aspect of the invention, the method further comprises: positioning the NFC antenna assembly on a packaging box containing the luminaire, enabling programming or adjustment of the lighting driver while the luminaire remains packaged.

Enables commissioning or configuration of the lighting driver while it remains packaged. This facilitates pre-installation adjustments, saving time, reducing handling, and minimizing the risk of product damage before installation.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Figure 1: shows an exemplary NFC antenna assembly according to an embodiment of this invention.
- Figure 2: shows an exemplary lighting system according to an embodiment of this invention.
- Figure 3: shows a user case where a luminaire housed within a packaging box, according to an embodiment of this invention.
- Figure 4: shows a method according to an embodiment of this invention.
- Figure 5: shows an exemplary commissioning setup according to an embodiment of this invention.

### DETAILED DESCRIPTION OF EMBODIMENTS

Illustrative embodiments of an NFC antenna assembly, a lighting system, and a method for commissioning a lighting driver in a lighting system are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

The present invention relates to an NFC antenna assembly that facilitates wired NFC for extended distances without requiring an intermediate booster driver or external power supply. This NFC antenna assembly, particularly suited for applications such as lighting systems, offers a highly accessible, cost-effective, and flexible solution for commissioning and maintaining NFC-enabled devices, such as streetlights.

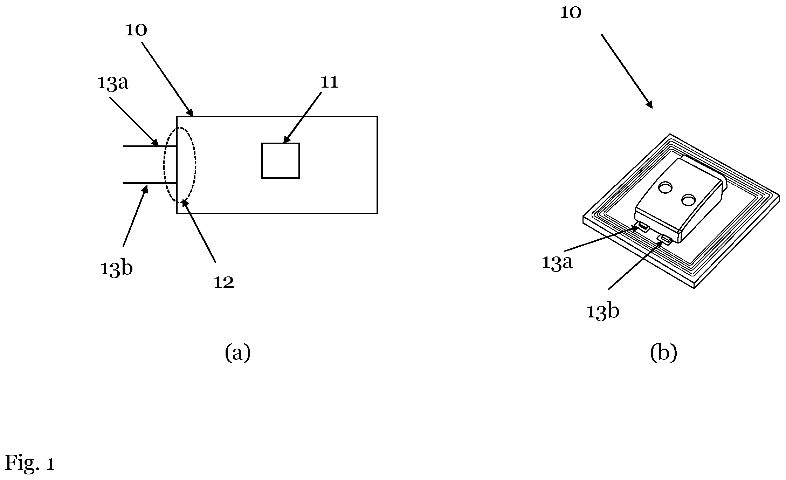

Figure 1(a) illustrates an NFC antenna assembly 10, designed with the following components: an NFC antenna 11, and a terminal 12 soldered onto and extending from a surface plane of the NFC antenna assembly 10. Notably, the terminal 12 is configured to connect two conductors 13a, 13b, enabling a wired connection between the NFC antenna assembly 10 and an external device.

The integrated NFC antenna 11 may be etched onto the substrate of the antenna assembly to facilitate communication with external NFC devices.

The terminal 12 is positioned on a surface plane of the NFC antenna assembly 10. The terminal 12 extends outward to enable physical connection with two external conductors 13a, 13b. The terminal 12 is soldered onto the antenna assembly 10, forming a mechanically stable and electrically conductive interface.

The dual-connection points on the terminal 12 allow simple copper wires to be securely attached. These conductors act as signal carriers, enabling wired NFC communication.

The wired conductors 13a, 13b, typically simple unpowered copper wires, connect the NFC antenna assembly to an external NFC antenna or device. They allow the NFC interface to extend beyond the immediate proximity of the antenna assembly, achieving communication distances exceeding 1 meter, preferably more than 2 meters, or even 4 meters.

Figure 1(b) shows a produce picture of the NFC antenna assembly 10. As shown in Figure 1(b), the NFC antenna assembly 10 has a slightly raised profile, distinguishing it from conventional flat NFC tags. This buck-like form factor provides additional space and structural support for the soldered terminal, ensuring secure attachment of the wired conductors.

The base of the NFC antenna assembly may comprise a durable, lightweight substrate material (e.g., FR4 or similar PCB material) to support the NFC antenna, and terminal components. The substrate extends beyond the raised central terminal part, creating a visible border or edge around the terminal area. This design provides stability for mounting and prevents direct mechanical stress on the terminal.

The overall dimensions of the NFC antenna assembly 10 are compact enough for integration into various devices but include a buck-like elevation of the terminal area. The substrate may range from 10 mm to 50 mm in length and width, forming a square or rectangular shape. The substrate may have a thickness of 0,3 mm to 3 mm.

The terminal part may range from 5 mm to 25 mm in length and width, centered on or near the substrate, leaving a margin around the edges for structural stability and to accommodate additional components like an antenna.

The terminal part is raised above the substrate and designed for the secure attachment of two conductors 13a and 13b. It includes dual solder points for conductors, typically spaced apart to prevent electrical interference. The terminal part's height can range between 3 mm to 5 mm, allowing enough space for secure wiring connections and mechanical durability.

The terminal part's thickness generally varies from 3 mm to 5 mm, particularly for designs with raised terminals or additional components that require a more robust structure. This broad range accommodates the functional requirements of both compact, embedded applications and larger, more durable industrial designs.

For example, the antenna assembly 10 might measure approximately 20 mm x 20 mm in width and height, with a raised terminal height of 5 mm.

The NFC antenna assembly 10 may include optional mounting features (e.g., adhesive backing or screw holes) for secure installation in its intended application, such as outside a luminaire housing or on a packaging box.

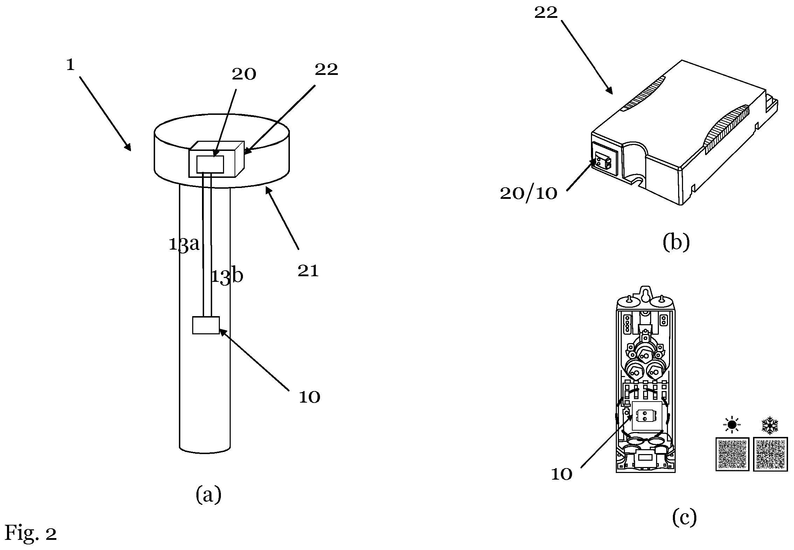

Figure 2(a) illustrates a lighting system 1 according to an embodiment of the invention. The lighting system 1 comprises a luminaire including a luminaire housing 21, a lighting driver 22 located within the luminaire housing 20, and an NFC antenna 20 arranged on the lighting driver 22 within the luminaire housing 21. The lighting system 1 further comprises an NFC antenna assembly 10 positioned outside the luminaire housing 21, and two conductors 13a, 13b connecting the NFC antenna 20 and the NFC antenna assembly 10, enabling NFC communication between the lighting driver 22 and the NFC antenna assembly 10. Preferably, the NFC antenna assembly 10 is an NFC antenna assembly shown in Figure 1.

This figure shows an implementation of the NFC-based communication system in the lighting system. In this example, one NFC antenna assembly 10 is positioned on the pole and the other NFC antenna assembly (i.e., the NFC antenna 20) is located inside the luminaire housing 21 (e.g., being attached to the lighting driver 22). This setup demonstrates how NFC communication is extended through wired conductors to allow remote access for commissioning and maintenance.

The luminaire housing 21 is positioned at the top of the pole and contains an NFC-enabled lighting driver 22. The lighting driver (as shown in Figure 2(b)), which may include an LED driver or other lighting technology components, is equipped with an internal NFC antenna. Possibly, the driver has an NFC tag inside. In certain embodiments, this internal NFC antenna is integrated directly into the PCB of the lighting driver 22, optimizing space and reducing the need for additional components.

One external NFC antenna 20 may be glued to the housing or otherwise attached to the driver in place where the NFC Tag is inside the drive. Possibly, the external NFC antenna 20 may be an NFC antenna assembly similar to the NFC antenna assembly 10 shown in Figure 1.

In another example, the lighting driver 22 may be equipped with a terminal where the two wires can be directly inserted to enable the connection to the external NFC assembly 10 positioned outside the luminaire housing 21.

The NFC antenna assembly 10 may be positioned at a convenient height on the pole, typically at a level accessible to human users (e.g., ground level). As shown in Figure 2(c), this NFC antenna assembly 10 serves as the remote NFC interface for programming, commissioning, or adjusting settings without requiring physical access to the luminaire housing.

This arrangement allows a commissioning device (e.g., a smartphone or NFC reader) to interact with the NFC antenna assembly 10 located outside of the luminaire housing 21, enabling indirect communication with the internal NFC antenna of the lighting driver 22, via the NFC antenna 20 inside the luminaire housing 21.

Two conductors (denoted as 13a and 13b) connect the NFC antenna 20 in the luminaire housing 21 to the external NFC antenna assembly 10 on the pole. These conductors, typically simple copper wires, allow signal transmission between the two NFC antenna assemblies without requiring intermediate amplification or a power supply. This configuration enables NFC communication over distances exceeding 1 meter, and in some cases, more than 2 meters or even 4 meters, without the necessity for intermediate boosters.

By relocating the NFC interface to a user-friendly height, the system eliminates the need for specialized equipment during commissioning, thereby reducing labor and safety concerns.

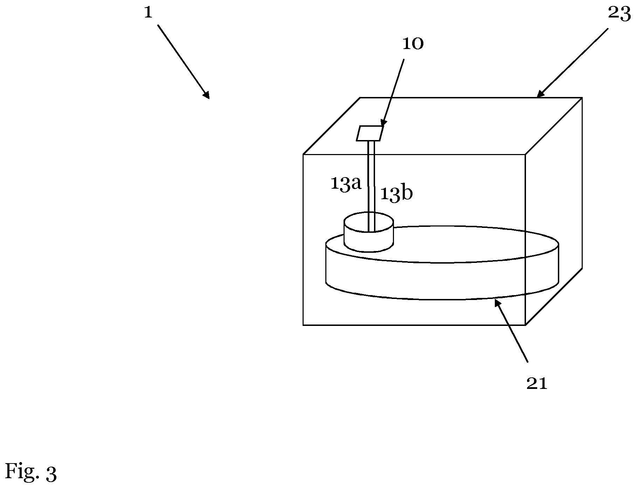

Figure 3 illustrates a luminaire housed within a packaging box 23, highlighting the NFC antenna assembly 10 positioned on the exterior of the box 23 to enable communication without the need to unbox the luminaire. The NFC antenna assembly 10 may be the NFC antenna assembly shown in Figure 1.

This arrangement demonstrates how the NFC antenna assembly 10 facilitates pre-installation commissioning or programming of the lighting driver while the luminaire remains securely packaged.

The luminaire (within the luminaire housing 21), is shown within a packaging box 23, which is designed to protect the lighting system during transportation and storage. The packaging box 23 provides sufficient space to house the luminaire securely while allowing external components, such as the NFC antenna assembly 10, to remain accessible.

The NFC antenna assembly 10 is attached or mounted on the outer surface of the packaging box 23, providing a convenient interface for commissioning or programming the lighting driver 22 without opening the box. The antenna assembly 10 is connected to the NFC antenna 20 attached to the driver via conductors that pass through the box material, enabling seamless communication.

The luminaire remains sealed inside, maintaining its integrity and preventing exposure to external elements until it is ready for installation.

The NFC antenna assembly's external placement allows for pre-installation configuration, such as programming lighting settings, adjusting dimming profiles, or updating firmware, without unboxing the luminaire. This saves time and reduces the risk of damage during handling.

The NFC antenna assembly is accessible on the outer surface of the box, positioned at a convenient height for users. This design simplifies the commissioning process, requiring no additional tools or access to the luminaire's internal components.

This arrangement allows the luminaire to be fully configured while still in its packaging, enabling faster installation on-site with minimal setup time.

This setup, as illustrated in Figure 3, highlights a practical solution for streamlining the commissioning process and reducing the operational overhead of installing and configuring luminaires.

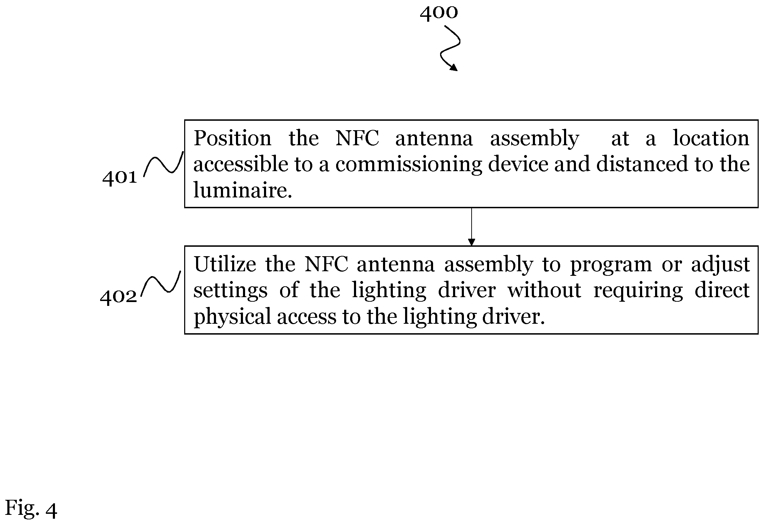

Figure 4 illustrates a method for commissioning a lighting system 1, as described in Figure 2(a), where an NFC antenna assembly 10 facilitates programming or adjusting the settings of a luminaire. This method enables remote commissioning without requiring direct physical access to the luminaire, utilizing the innovative setup of external NFC antenna assemblies and conductors.

The commissioning process involves positioning the NFC antenna assembly 10 at a location accessible to a commissioning device, such as a smartphone or dedicated NFC reader.

In particular, the external NFC antenna assembly 10 is positioned at an accessible location, such as at a height reachable by a user on the pole or on the packaging box, depending on the use case. It acts as the interface for the commissioning device to interact with the lighting driver 22 inside the luminaire.

A smartphone, tablet, or other NFC reader/writer device may be used for commissioning. The device communicates with the external NFC antenna assembly to send commands or transfer data to the lighting driver 22.

The commissioning device communicates with the external NFC antenna assembly 10, transmitting the necessary data through the conductors to the internal NFC antenna. This method allows for programming or adjusting the settings of the lighting driver without requiring direct physical access to the internal components, thereby simplifying the commissioning process and reducing associated risks.

Possibly, the commissioning device may initiate communication by bringing its NFC reader within range of the external NFC antenna assembly 10.

The external NFC antenna assembly transmits the signals via the conductors 13a, 13b to the NFC antenna 20 or antenna assembly inside the luminaire housing, then to the internal NFC antenna or tag inside the driver.

The signals received by the internal NFC antenna are used to program or adjust settings of the lighting driver. This may include: adjusting light output or dimming schedules, configuring time-based settings (e.g., chronoSTEP profiles), or performing firmware updates.

It is already fundamentally known that NFC-based programming can be performed without a power supply to the luminaire driver. In such cases, information is written into the driver's memory while unpowered and becomes operational only when the driver is subsequently powered. This capability allows for efficient pre-installation programming and field adjustments, significantly simplifying the commissioning process.

Notably, the NFC antenna assembly 10 described in the invention may be referred to as the "Fast Programming Tag", highlighting its function of enabling quick and efficient commissioning and programming of luminaires and lighting drivers. This naming emphasizes the antenna assembly's ability to facilitate streamlined configuration processes, particularly in field installations and large-scale lighting projects.

The Fast Programming Tag leverages the capability of NFC programming to function without requiring the luminaire driver to be powered. Possibly, the Fast Programming Tag, or namely the NFC antenna assembly 10, may include a memory component, such as non-volatile EEPROM or flash memory, to store configuration data written via NFC. During commissioning, configuration data is written into the memory of the unpowered driver via the NFC interface. This data remains in the antenna assembly even when the luminaire driver is unpowered. When the driver is subsequently powered, the stored data is accessed and applied to the driver, enabling seamless programming and commissioning.

This feature enhances operational flexibility, allowing luminaires to be pre-configured during packaging or reprogrammed in the field without requiring a power source at the time of programming.

Once commissioning is complete, the lighting driver 22 is ready for operation without requiring physical access to the luminaire.

The method allows commissioning from a convenient, accessible location, such as ground level, without the need for lifting equipment or unsealing the luminaire housing.

It also reduces labor and equipment costs by eliminating the need to access hard-to-reach NFC antennas located within the luminaire housing.

This method further allows the luminaire housing to be kept sealed during commissioning, protecting its components from environmental exposure. This solution enables pre-installation configuration while the luminaire is still packaged, streamlining on-site setup.

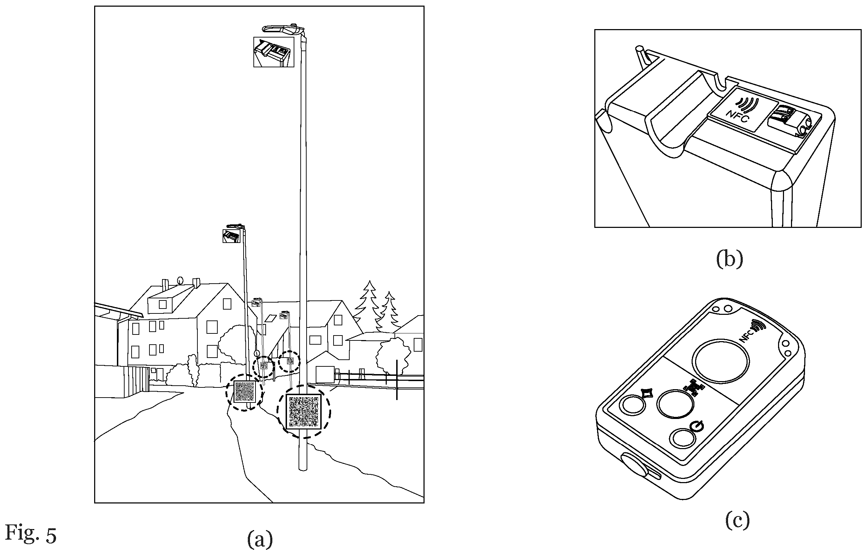

Figure 5 demonstrates an application scenario for configuring and commissioning catalog luminaires in the field using an NFC-enabled commissioning process combined with QR codes and a customer-friendly web interface. This setup enables customers to program lighting systems with standard settings and later adjust or reprogram these settings on-site as needed, ensuring flexibility and ease of operation.

Figure 5(a) shows a row of luminaires on poles, representing typical streetlight installations. Each pole contains an NFC-enabled luminaire capable of remote commissioning, as shown in Figure 5(b).

Each pole has a QR code prominently displayed at an accessible height. This QR code provides a quick and efficient method for installers to interact with the commissioning system.

The installer may use an NFC handheld device (e.g., as shown in Figure 5(c)) or smartphone to communicate with the luminaire's NFC antenna assembly. This device facilitates programming or adjustment of settings in the field.

The process can be integrated with the customer's website, allowing installers or end-users to:
- Access the lighting system management interface (e.g., companionSUITE) .
- Select desired settings, such as adjusting drive current, selecting chronoSTEP profiles, and adjusting the CLO (Constant Light Output) starting point.
- Generate a new QR code for reprogramming.

In particular, the installer can scan the QR code on the pole using their smartphone or commissioning device. The QR code directs the installer to a webpage on the customer's website, which provides access to configuration options.

On the webpage, the installer selects the desired profile or settings for the luminaire:
- Adjusting drive current to modify light intensity.
- Selecting a pre-configured chronoSTEP profile to optimize energy use.
- Setting the CLO starting point for consistent lighting output over the luminaire's lifespan.

After selecting the settings, the webpage generates a new QR code containing the updated profile or configuration instructions. The installer scans the generated QR code using the NFC commissioning device, which transmits the settings to the luminaire's NFC antenna assembly. The luminaire is reprogrammed wirelessly with the updated settings.

The process is completed with the luminaire configured to the new settings. The installer can move on to the next pole and repeat the process as needed.

This embodiment effectively showcases a streamlined, customer-centric commissioning process that combines NFC technology, QR codes, and web-based customization to deliver a practical and scalable solution for modern lighting systems.

Customers can sell standard luminaires with default settings that are easily reprogrammed in the field to suit specific requirements. The QR code and web-based process simplify the commissioning workflow, reducing the need for technical expertise or specialized tools.

The integration of the lighting system management interface, such as companionSUITE, into the customer's website ensures a seamless interface for selecting and applying profiles. Field reprogramming eliminates the need for custom configurations at the time of manufacture, reducing production complexity and cost.

The process can be repeated for multiple luminaires in a large installation, making it suitable for extensive projects like streetlight commissioning.

To summarize, this invention offers a practical and efficient solution for commissioning lighting systems, particularly in applications like street lighting, where accessibility is a concern. By extending the NFC interface to a more accessible location and enabling communication over extended distances without additional power sources, the system enhances safety, reduces costs, and streamlines both installation and maintenance processes.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A near field communication, NFC, antenna assembly (10) comprising:
an NFC antenna (12), and
a terminal (13) soldered onto and extending from a surface plane of the NFC antenna assembly (10),
the terminal (13) being configured to connect two conductors (13a, 13b), enabling a wired connection between the NFC antenna (12) and an external device.

2. The NFC antenna assembly (10) of claim 1, wherein the terminal (13) is configured to connect the two conductors (13a, 13b) to an external NFC antenna (20), allowing for extended NFC communication over a distance exceeding 1 meter, preferably exceeding 2 meters.

3. The NFC antenna assembly (10) of any preceding claims, wherein the terminal (13) is configured to facilitate the insertion of the two conductors (13a, 13b) at an angle ranging from 0 to 60 degrees relative to the terminal's entry point.

4. A lighting system (1), comprising:
a luminaire including a luminaire housing (21), a lighting driver (22) located within the luminaire housing (21), and an NFC antenna (20) arranged on the lighting driver (22) inside the luminaire housing (21);
an NFC antenna assembly (10) positioned outside the luminaire housing (21); and
two conductors (13a, 13b) connecting the NFC antenna (20) and the NFC antenna assembly (10), enabling NFC communication between the lighting driver (22) and the NFC antenna assembly (10), which preferably is an NFC antenna assembly (10) according to any of claims 1 to 3.

5. The lighting system (1) of claim 4, wherein the two conductors (13a, 13b) extend through the luminaire housing (21), enabling NFC communication with the lighting driver (22) while the luminaire remains sealed.

6. The lighting system (1) of claim 4 or 5, wherein the lighting driver (22) includes an internal NFC antenna disposed within the lighting driver (22), the internal NFC antenna being configured to facilitate NFC communication with the NFC antenna assembly (10) via the NFC antenna (20).

7. The lighting system (1) of claim 6, wherein the lighting driver (22) comprises a printed circuit board, PCB, and the internal NFC antenna is integrated into the PCB of the lighting driver (22).

8. The lighting system (1) of any of claims 4 to 7, wherein the NFC antenna (20) is an NFC antenna assembly (10) according to any of claims 1 to 3.

9. The lighting system (1) of any of claims 4 to 8, wherein the NFC antenna assembly (10) outside the luminaire housing (21) is mounted at a height accessible to a human user.

10. The lighting system (1) of any of claims 4 to 8, further comprising:
a packaging box (23) for the luminaire;
wherein the NFC antenna assembly (10) outside the luminaire housing (21) is positioned outside the packaging box (23), allowing for NFC communication with the lighting driver (22) while the luminaire is within the packaging box (23) .

11. A method (400) for commissioning a lighting driver (22) in a lighting system (1) of any of claims 4 to 10, comprising:
positioning (401) the NFC antenna assembly (10) at a location accessible to a commissioning device and distanced to the luminaire; and
utilizing (402) the NFC antenna assembly (10) to program or adjust settings of the lighting driver (22) without requiring direct physical access to the lighting driver (22).

12. The method (400) of claim 11, wherein the NFC antenna assembly (10) is positioned at a height accessible to a human user, facilitating commissioning and maintenance without additional equipment.

13. The method (400) of claim 11, further comprising:
positioning the NFC antenna assembly (10) on a packaging box (23) containing the luminaire, enabling programming or adjustment of the lighting driver (22) while the luminaire remains packaged.

## Amended claims

### Amended claims in accordance with Rule 137(2) EPC.

1. A near field communication, NFC, antenna assembly (10) comprising:
an NFC antenna (12),
**characterized in that**:
a terminal (13) soldered onto and extending from a surface plane of the NFC antenna assembly (10),
and two conductors (13a, 13b) connected to the terminal (13),
wherein the two conductors (13a, 13b) are configured to be connected to an external NFC antenna (20), thereby enabling passive NFC communication between the NFC antenna (12) and the external NFC antenna (20) over a distance exceeding 1 meter, preferably exceeding 2 meters, and up to several meters.

2. The NFC antenna assembly (10) of any preceding claims, wherein the terminal (13) is configured such that the two conductors (13a, 13b) are insertable into the terminal (13) at an angle ranging from 0 to 60 degrees relative to the terminal's entry point.

3. A lighting system (1), comprising:
a luminaire including a luminaire housing (21), a lighting driver (22) located within the luminaire housing (21), and an NFC antenna (20) arranged on the lighting driver (22) inside the luminaire housing (21);
an NFC antenna assembly (10) positioned outside the luminaire housing (21), wherein the NFC antenna assembly (10) is an NFC antenna assembly (10) according to claims 1 or 2; and
two conductors (13a, 13b) connecting the NFC antenna (20) and the NFC antenna assembly (10), enabling NFC communication between the lighting driver (22) and the NFC antenna assembly (10).

4. The lighting system (1) of claim 3, wherein the two conductors (13a, 13b) extend through the luminaire housing (21), enabling NFC communication with the lighting driver (22) while the luminaire remains sealed.

5. The lighting system (1) of claim 3 or 4, wherein the lighting driver (22) includes an internal NFC antenna disposed within the lighting driver (22), the internal NFC antenna being configured to facilitate NFC communication with the NFC antenna assembly (10) via the NFC antenna (20).

6. The lighting system (1) of claim 5, wherein the lighting driver (22) comprises a printed circuit board, PCB, and the internal NFC antenna is integrated into the PCB of the lighting driver (22).

7. The lighting system (1) of any of claims 3 to 6, wherein the NFC antenna (20) is an NFC antenna assembly (10) according to any of claims 1 to 2.

8. The lighting system (1) of any of claims 3 to 7, wherein the NFC antenna assembly (10) outside the luminaire housing (21) is mounted at a height accessible to a human user.

9. The lighting system (1) of any of claims 3 to 7, further comprising:
a packaging box (23) for the luminaire;
wherein the NFC antenna assembly (10) outside the luminaire housing (21) is positioned outside the packaging box (23), allowing for NFC communication with the lighting driver (22) while the luminaire is within the packaging box (23).

10. A method (400) for commissioning a lighting driver (22) in a lighting system (1) of any of claims 3 to 9, comprising:
positioning (401) the NFC antenna assembly (10) at a location accessible to a commissioning device and distanced to the luminaire; and
utilizing (402) the NFC antenna assembly (10) to program or adjust settings of the lighting driver (22) without requiring direct physical access to the lighting driver (22).

11. The method (400) of claim 10, wherein the NFC antenna assembly (10) is positioned at a height accessible to a human user, facilitating commissioning and maintenance without additional equipment.

12. The method (400) of claim 10, further comprising:
positioning the NFC antenna assembly (10) on a packaging box (23) containing the luminaire, enabling programming or adjustment of the lighting driver (22) while the luminaire remains packaged.
